# EUROPEAN PATENT APPLICATION

(11) **EP 4 822 615 A1**
(43) Date of publication of application: **14.10.2026**
(21) Application number: 26171556.9
(22) Date of filing: 09.04.2026
(51) Int. Cl.: G06N 20/00, G06F 9/54

(54) **SYSTEMS AND METHODS FOR MANAGING A PLURALITY OF AGENTS USING AN AGENT MANAGEMENT MODEL**

(30) Priority: 11.04.2025 US 202563787406 P; 07.10.2025 US 202519351346
(71) Applicant: Concentrix CVG Customer Management Delaware LLC, Cincinnati, OH 45202 (US)
(72) Inventor: Eniojukan, Samuel Ayodeji, Cincinnati, Ohio, 45202 (US); Ennis, Shawn Patrick, Cincinnati, Ohio, 45202 (US)
(74) Representative: Köllner, Malte

(57) **Abstract**

Systems and methods for managing a plurality of agents using an agent management model are provided. The system includes one or more processors; an agent management model operating on the one or more processors; and one or more transitory or non-transitory computer-readable media storing instructions that are executable to cause the one or more processors to perform operations. The operations include receiving information from at least one virtual agent of a plurality of virtual agents. The operations include processing, by the agent management model, the information from the at least one virtual agent to generate a control instruction. The operations include transmitting the control instruction to the plurality of virtual agents. The operations include instructing the plurality of virtual agents to execute a set of tasks based on the control instruction.

## Description

### FIELD

The present disclosure relates generally to systems and methods for managing a plurality of agents using an agent management model.

### BACKGROUND

Modern computing systems increasingly rely on distributed collections of virtual agents operating across heterogeneous infrastructure. Managing such a plurality of virtual agents presents technical challenges in coordinating task execution, balancing dynamic workloads, and ensuring reliable communication. Without effective orchestration, systems can experience inefficient resource utilization, latency spikes, or degraded performance as tasks may be unevenly distributed or assigned to incompatible agents. These challenges are compounded by evolving workloads and varying agent capabilities that require continual adaptation of allocation strategies.

Accordingly, improved systems and methods for managing a plurality of agents are desired in the art. In particular, systems and methods for managing a plurality of agents that provide improved task allocation and adaptive load balancing would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a system for managing a plurality of agents using an agent management model is provided. The system includes one or more processors; an agent management model operating on the one or more processors; and one or more transitory or non-transitory computer-readable media storing instructions that are executable to cause the one or more processors to perform operations. The operations include receiving information from at least one virtual agent of a plurality of virtual agents. The operations include processing, by the agent management model, the information from the at least one virtual agent to generate a control instruction. The operations include transmitting the control instruction to the plurality of virtual agents. The operations include instructing the plurality of virtual agents to execute a set of tasks based on the control instruction.

In accordance with another embodiment, a method for managing a plurality of agents using an agent management model is provided. The method includes receiving information from at least one virtual agent of a plurality of virtual agents. The method includes processing, by an agent management model, the information from the at least one virtual agent to generate a control instruction associated with the plurality of virtual agents. The method includes transmitting the control instruction to the plurality of virtual agents. The method includes instructing the plurality of virtual agents to execute a set of tasks based on the control instruction.

In accordance with a third embodiment, a system for managing a plurality of agents using an agent management model is provided. The system includes one or more processors; an agent management model operating on the one or more processors; and one or more transitory or non-transitory computer-readable media storing instructions that are executable to cause the one or more processors to perform operations. The operations include receiving information from at least one virtual agent of a plurality of virtual agents. The operations include generating, by the agent management model, an updated set of internal parameters for the plurality of virtual agents based on the information from the at least one virtual agent. The operations include generating, by the agent management model, a control instruction based on the updated set of internal parameters. The operations include transmitting the control instruction to the plurality of virtual agents. The operations include instructing the plurality of virtual agents to execute a model retraining process for a subset of virtual agents of the plurality of virtual agents using the control instruction.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
Figure 1 is a block diagram of a system for managing a plurality of agents using an agent management model in accordance with embodiments of the present disclosure;
Figure 2 is a block diagram of a system for instructing the plurality of virtual agents to execute one or more tasks in accordance with embodiments of the present disclosure;
Figure 3 is a block diagram of a system for validating the information from at least one virtual agent in accordance with embodiments of the present disclosure;
Figure 4 is a block diagram of a system for the registry of at least one virtual agent into the plurality of virtual agents in accordance with embodiments of the present disclosure; and
Figure 5 is a flow diagram of a method for managing a plurality of agents using an agent management model in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first," "second," and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

Modern computing systems increasingly rely on distributed collections of virtual agents deployed across heterogeneous infrastructure. Managing such a plurality of virtual agents presents technical challenges in coordinating task execution, balancing dynamic workloads, and ensuring reliable communication. Without effective orchestration, systems can experience inefficient resource utilization, latency spikes, or degraded performance as tasks may be unevenly distributed or assigned to incompatible agents. To address this, a technical solution may include managing the plurality of virtual agents using an agent management model. The agent management model may receive information from the virtual agents and classifies tasks based on their type and complexity. It then generates control instructions to allocate tasks to the most appropriate agents or groups of agents. This may improve the adaptive load balancing and efficient task distribution within the system.

Another technical problem involves maintaining consistent and secure management of agent configurations and internal parameters across a distributed environment. Virtual agents often require periodic updates to model weights, processing rules, or policy settings to address errors, optimize performance, or comply with changing requirements. Coordinating these updates without introducing inconsistencies or downtime is complex, especially when agents operate on remote or third-party infrastructure. A technical solution to this problem includes having the agent management model generate updated internal parameters for the plurality of virtual agents based on validated performance metrics or system-wide updates. The model can then generate and transmit control instructions to direct agents to apply these updates without disrupting ongoing operations. Additionally, a validation process may confirm the integrity and legitimacy of incoming agent reports.

Integrating new or external virtual agents also introduces technical hurdles, such as verifying compatibility, security, and functional capabilities. Without robust validation and integration mechanisms, new agents may introduce vulnerabilities, duplicate existing functionality, or disrupt workflows. A technical solution includes receiving requests from external agents and applying a validation process to confirm their authorization, compatibility, and readiness. Once validated, the agent management model can incorporate them into the managed pool by updating registries, allocating resources, and issuing configuration instructions. Furthermore, to maintain system reliability and fault tolerance, the agent management model can monitor agent behavior continuously and, if necessary, remove, isolate, or suspend malfunctioning agents in real time to prevent errors from propagating through interconnected workflows.

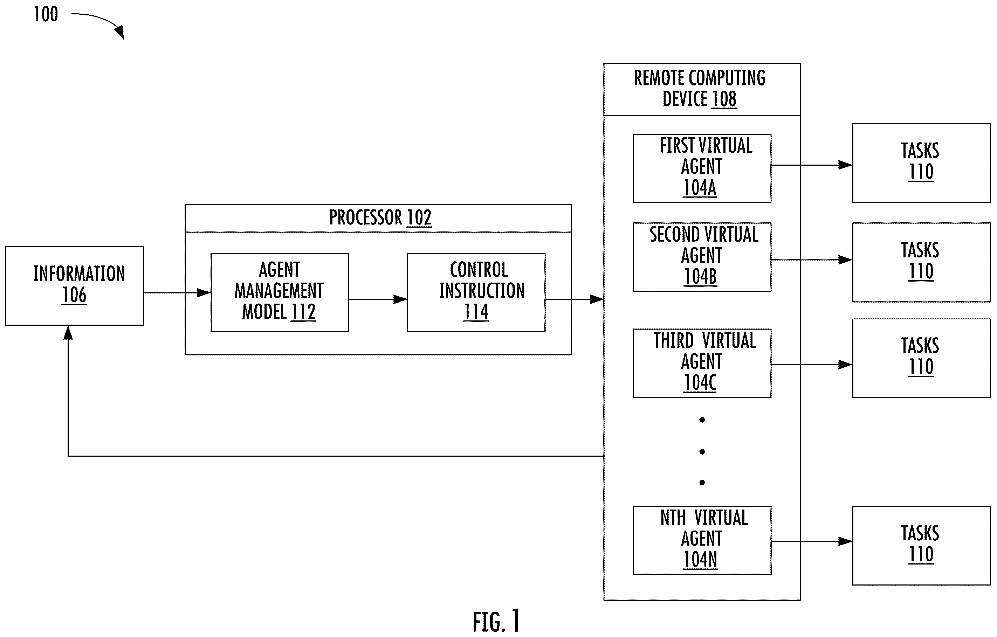

Referring now to the drawings, Figure 1 is a block diagram of a system for managing a plurality of agents using an agent management model in accordance with embodiments of the present disclosure.

System 100 includes one or more processors 102 that can be utilized to perform one or more operations. The one or more processors 102 can include any suitable processing device (e.g., a processor core, a microprocessor, an ASIC, a FPGA, a controller, a microcontroller, etc.) and can be one processor or a plurality of processors that are operatively connected. The one or more processors 102 can perform operations in series and/or in parallel. The one or more processors 102 may be dedicated to a particular computing device and/or may be utilized by a plurality of devices to perform processing tasks.

Processor 102 may be designed and/or configured to perform any method, method step, or sequence of method steps in any embodiment described in this disclosure, in any order and with any degree of repetition. For instance, processor 102 may be configured to perform a single step or sequence repeatedly until a desired or commanded outcome is achieved; repetition of a step or a sequence of steps may be performed iteratively and/or recursively using outputs of previous repetitions as inputs to subsequent repetitions, aggregating inputs and/or outputs of repetitions to produce an aggregate result, reduction or decrement of one or more variables such as global variables, and/or division of a larger processing task into a set of iteratively addressed smaller processing tasks. This may be used to train, refine, or otherwise improve any algorithm, machine-learning model, neural network, and the like mentioned herein.

Processor 102 may include a single computing device operating independently, or may include two or more computing devices operating in concert, in parallel, sequentially, or the like; two or more computing devices may be included together in a single computing device or in two or more computing devices. Processor 102 may include, but is not limited to, for example, a computing device or cluster of computing devices in a first location and a second computing device or cluster of computing devices in a second location. Processor 102 may include one or more computing devices dedicated to data storage, security, distribution of traffic for load balancing, and the like. Processor 102 may distribute one or more operations as described below across a plurality of computing devices, which may operate in parallel, in series, redundantly, or in any other manner used for the distribution of tasks or memory between computing devices.

System 100 may include memory that can store data and/or instructions. Memory can include one or more non-transitory computer-readable storage mediums, such as RAM, ROM, EEPROM, EPROM, flash memory devices, magnetic disks, etc., and combinations thereof. The data can include user data, application data, operating system data, etc. The data can include text data, image data, audio data, statistical data, user profile data, etc. The instructions can include instructions that when executed by one or more of the processors 102 may cause system 100 to perform operations as described herein.

The operations may include receiving information 106 from at least one virtual agent 104A of a plurality of virtual agents 104A-C. As used herein, a virtual agent 104A-C refers to any software-based model or module capable of performing one or more computing tasks 110 in an automated or semi-automated manner. This may include, but is not limited to, machine learning models, large language models (LLMs), small language models, rule-based agents, heuristic engines, and the like. The virtual agents 104A-C may include various artificial intelligence systems designed to receive inputs, process data, and generate outputs or actions. The virtual agents 104A-C may be deployed in diverse computing environments, supporting scalable and flexible automation of tasks in response to user inputs, system events, or predefined workflows.

The plurality of virtual agents 104A-C may include any number of individually configured agents, such as a first virtual agent 104A, a second virtual agent 104B, a third virtual agent 104C, up to and including an Nth virtual agent 104N. Each agent may have specialized capabilities, model architectures, or task assignments. In a non-limiting example, a first virtual agent 104A may be optimized for text classification, a second virtual agent 104B may handle conversational question answering using an LLM, and a third virtual agent 104C may perform domain-specific reasoning or data analytics. Additional agents may be designed for integration with external systems or services, enabling the system as a whole to support complex, heterogeneous use cases.

In certain embodiments, the plurality of virtual agents 104A-C may operate on one or more remote computing devices 108. For example, multiple virtual agents 104A-C may be instantiated and executed on a single remote computing device 108, such as a cloud server or edge node, while in other cases, the agents may be distributed across multiple remote computing devices 108 with each device hosting one or more agents. This distributed deployment may facilitate improved scalability, fault tolerance, and load balancing across heterogeneous computing resources. Communications between the virtual agents 104A-C and the remote computing devices 108 may occur over network connections such as the Internet, local area networks, or other suitable channels. The virtual agents 104A-C may also collaborate or coordinate with one another to accomplish complex workflows, for example by preprocessing input data in one agent and passing results to another for further analysis or transformation.

In various embodiments, a virtual agent 104A-C may be configured to perform a wide range of tasks 110 to support automated, intelligent, or semi-automated computing functions. These tasks may include processing natural language inputs to generate conversational responses and answering user queries. They can also involve classifying text or performing data extraction and information retrieval from both structured and unstructured sources, such as documents or databases. Agents 104A-C may also conduct predictive modeling, such as forecasting trends or scoring records, generate personalized recommendations, or orchestrate multi-step workflows by managing task execution order or applying business rules. Further tasks 110 may include user interface automation, anomaly detection, fraud prevention, semantic search, summarization of large text corpora, translation between languages, sentiment analysis, and integration with external APIs or data sources.

As used herein, a characteristic of a virtual agent 104A-C may broadly refer to any attribute, capability, or operational state that defines or influences the behavior, performance, or function of the agent within the plurality of virtual agents. Such characteristics may include, without limitation, the type of data an agent is capable of processing, the computing resources it requires, its availability status at a given time, its integration with other agents or systems, and the like. Characteristics may include the agent's architecture or training domain, or dynamic, current workload, remaining processing capacity, responsiveness to incoming requests, and the like.

In some embodiments, the characteristics of a virtual agent 104A-C may include its processing capabilities. For example, one agent may be configured to perform image processing tasks such as object recognition, facial detection, or optical character recognition, while another agent may specialize in natural language processing tasks such as question answering, summarization, or sentiment analysis. Additional agents may be designed for multimodal processing, capable of integrating both textual and visual data streams, or for domain-specific analytics. In an embodiment, specialized agents may be selected or combined to perform complex workflows involving multiple data modalities.

Other characteristics of a virtual agent 104A-C may pertain to its availability and resource allocation. An availability characteristic may indicate whether the agent is currently online or offline, whether it is actively engaged in executing another task, or whether it has remaining processing capacity to accept additional workloads. For example, an agent operating in a cloud environment may be continuously available but throttled due to concurrent task execution, while an edge-deployed agent may only become available when triggered by a local event. Availability may also encompass temporal constraints, such as scheduling rules or priority levels, that govern when and how an agent can participate in distributed workflows.

The information 106 associated with at least one agent of the plurality of agents 104A-C may refer to any data, message, signal, or structured representation transmitted, generated, or otherwise provided by at least one virtual agent 104A-C. Information 106 may include any component of the coordination, execution, and management of one or more tasks 110 performed by the plurality of virtual agents 104A-C. The information 106 associated with at least one agent is not limited to a single data type or format and may encompass any content necessary to enable or enhance system operation, including instructions, results, status updates, metadata, or control signals exchanged between agents and associated systems.

For example, information 106 may be directly related to task 110 execution. Exemplary information 106 may include intermediate results, model predictions, classification outputs, structured payloads describing analysis results, recommended actions, or transformed input data. It may also include task status indicators like completion confirmations, error notifications, or progress metrics to support workflow management. In some embodiments, information 106 may convey details regarding an identified issue, operational problem, or system-wide modification. Additionally, information 106 may include detected anomalies, fault conditions, or policy violations. It may also contain details describing the nature, context, and severity of an issue. In some cases, it can include information that initiates or defines a system-wide change, such as updating configuration parameters, deploying new models, or reconfiguring workflows.

Additionally, information 106 may include updates related to a user or user profile, such as changes to preferences, permissions, or behavioral models based on observed interactions or explicit inputs. Such information may include user identifiers, attribute values, policy assignments, or consent metadata, enabling the system to maintain personalized and compliant service delivery. Further, information 106 may facilitate system-level operations such as load balancing and task coordination among the plurality of virtual agents 104. For example, a virtual agent 104A-C may generate information indicating resource utilization, workload estimates, or performance metrics used to distribute tasks dynamically. Information 106 may also include coordination data such as task dependencies, routing instructions, or scheduling metadata, and the like.

System 100 includes an agent management model 112. The agent management model 112 may be configured to coordinate, communicate with, manage, and/or update a plurality of virtual agents 104A-C. The agent management model 112 may be implemented as a machine learning model, large language model (LLM), small language model, or other advanced computational framework.

The agent management model 112 may be trained or configured to interpret information 106 received from the virtual agents 104, such as status updates, task results, error reports, or resource utilization metrics. Based on this input, the agent management model 112 can generate coordination directives, assign tasks, balance workloads, or update operational parameters for one or more agents. For example, if a first virtual agent 104A reports a high workload or encounters error conditions, the agent management model 112 can respond by reassigning tasks to a second virtual agent 104B, initiating scaling operations, and/or issuing configuration changes to improve overall system performance.

In some embodiments, the agent management model 112 may also function as a central communication hub or policy engine for the system. It may maintain knowledge of the capabilities, configurations, and current states of each virtual agent 104. The model may store or access metadata describing agent 104A-C assignments, priorities, or dependencies. Additionally, the agent management model 112 may enforce coordination policies to ensure consistent and reliable operation of complex workflows involving multiple agents. The agent management model 112 may support secure communications, authentication, and access control between agents.

The agent management model 112 may further be configured to initiate updates or modifications to the virtual agents 104A-C themselves. For example, it may distribute new model weights, configuration files, or operational rules to one or more agents in response to system-wide changes, policy updates, or performance optimization goals. In certain implementations, the agent management model 112 may even retrain or fine-tune agents using new data.

With continued reference to Figure 1, the operations include processing, by the agent management model 112, the information 106 from at least one virtual agent 104A-C to generate a control instruction 114. As used in the current disclosure, a control instruction 114 may generally refer to any command, directive, configuration update, or structured message generated by the agent management model 112 for the purpose of managing, coordinating, or directing the operation of the plurality of virtual agents 104A-C. The control instruction 114 may include information specifying what task an agent 104A-C should perform, how it should perform the task 110, when it should execute the task 110, or how it should communicate results to other agents or system components. Control instruction 114 may be represented in various formats, such as structured data objects, API calls, network messages, or configuration payloads.

In an embodiment, control instruction 114 may be generated by the agent management model 112 in response to processing information 106 received from at least one virtual agent 104A-C. For example, the agent management model 112 may analyze status reports, workload metrics, error notifications, or task results included in information 106 to determine the current operational state of the system. Based on this analysis, the agent management model 112 may generate control instructions 114 that include specific directives intended to optimize or adapt system behavior. The generation of control instructions 114 may rely on predefined management policies, learned patterns from historical data, or adaptive algorithms that enable context-aware decision-making.

The control instruction 114 may serve a variety of important functions within system 100. For instance, it may include task assignment instructions specifying which agent should perform a particular task 110, including details such as input data references, required parameters, or execution constraints. Control instruction 114 may also support load balancing by directing tasks 110 to less-loaded agents or computing nodes to achieve even distribution of workload and prevent resource bottlenecks. In the context of the distribution of computing resources, control instruction 114 may allocate CPU, memory, storage, or network bandwidth among agents.

Additionally, control instruction 114 may define task sequencing by specifying execution order, dependencies, or conditional logic for multi-step workflows involving multiple agents. This enables coordinated processing of complex tasks that require results from one agent to be passed to another. Control instruction 114 may further facilitate agent-to-agent communication by specifying routing information, data transformation requirements, or communication protocols that agents should use when exchanging intermediate results or coordinating their activities.

Additionally, control instruction 114 may also include configuration updates, such as changing operational parameters of an agent, initiating model updates, restarting agents, or modifying access permissions. It may support system-wide adaptations in response to detected anomalies or policy changes by instructing agents to enter safe modes, reroute tasks, or apply mitigation strategies.

With continued reference to Figure 1, the operations may include transmitting the control instruction 114 from the agent management model 112 to the plurality of virtual agents 104A-C. This transmission may occur over one or more network connections, including local area networks, wide area networks, or the Internet. By transmitting the control instruction 114, the agent management model 112 provides the virtual agents 104A-C with specific directives, configuration updates, or coordination details necessary to execute assigned tasks 110, adjust operational parameters, or communicate effectively with other agents.

With continued reference to Figure 1, the operations include instructing the plurality of virtual agents 104A-C to execute a set of tasks 110 based on the control instruction 114. Once the control instruction 114 has been transmitted to the virtual agents 104A-C, each virtual agent 104A-C may parse and interpret the instruction to determine the specific directives it contains. These directives may include task identifiers, input data references, execution parameters, sequencing requirements, or priority levels, enabling each virtual agent 104A-C to understand precisely which task or subset of tasks 110 it is responsible for performing.

In various embodiments, the control instruction 114 may include information related to task allocation across the plurality of virtual agents 104. For example, control instruction 114 may specify that the first virtual agent 104A should perform data preprocessing, the second virtual agent 104B should conduct classification or analysis, and the third virtual agent 104C should handle post-processing or result aggregation. By interpreting these instructions, the virtual agents 104A-C can coordinate their individual operations to implement complex, multistage workflows.

System 100 may further enable each virtual agent 104A-C to access necessary input data, configuration settings, and communication channels specified within the control instruction 114. The control instruction 114 may define the required resources. This may include defining computing capacity, storage locations, and routing or messaging details to facilitate agent-to-agent communication. For example, once the first virtual agent 104A completes its assigned sub-task, it may automatically transmit intermediate results to the second virtual agent 104B as specified in the instruction.

In some implementations, system 100 may also monitor the execution status of the assigned tasks 110 using feedback channels established between the virtual agents 104A-C and the agent management model 112. The virtual agents 104A-C may report task progress, completion confirmations, or error conditions back to the agent management model 112. This feedback may be used to update system state, generate new control instructions 114 for subsequent tasks, or trigger remedial actions. Examples of remedial actions may include reassigning failed tasks, reallocating computing resources, and the like.

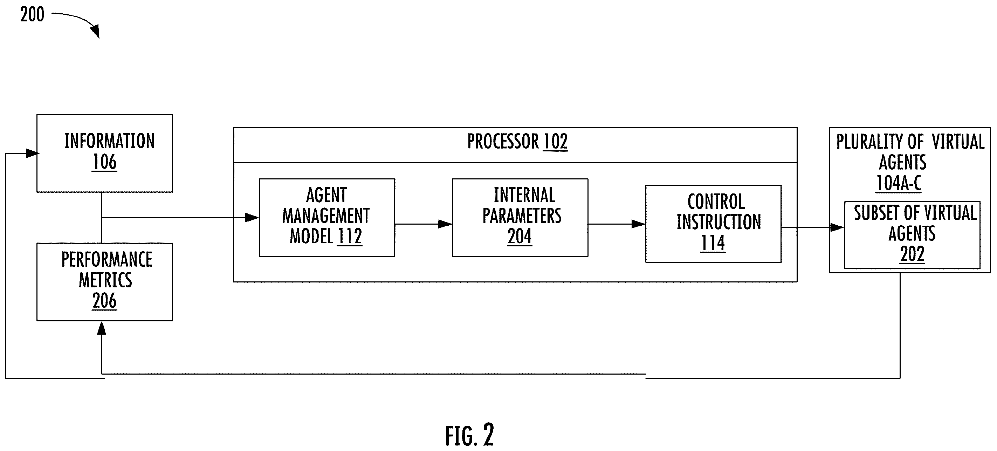

Referring now to Figure 2, a block diagram for instructing the plurality of virtual agents to execute one or more tasks.

The operations may include accessing a set of tasks 110. The agent management model 112 may access the set of tasks 110 by retrieving task definitions, metadata, or task queues from one or more data repositories, workflow engines, or external systems. The set of tasks 110 may include structured descriptions specifying task types, required input data, processing parameters, priority levels, dependencies, or execution constraints. The agent management model 112 may interface with task management services, databases, or scheduling modules to query, receive, or access the set of tasks 110 in real time or at predetermined intervals.

Accessing the set of tasks 110 may include assigning, by the agent management model 112, a weight to each task of the set of tasks 110 based on at least a complexity metric and a response time metric. These metrics may allow the agent management model 112 to evaluate and quantify both the relative difficulty and the service urgency of each task 110. In some embodiments, the agent management model 112 may be configured to allocate or reallocate computing resources and processing responsibilities between the plurality of virtual agents 104A-C in response to the weighted prioritization of tasks 110.

The tasks may be weighted according to a complexity metric, The complexity metric refers to a measure of the expected difficulty or resource requirement needed to complete a task 110 within the agentic framework. This metric may be determined by analyzing the task 110 against historical or analogous tasks performed by the plurality of virtual agents 104A-C. Features considered may include computing resource requirements, modality-specific processing requirements (e.g., image analysis, language reasoning, multimodal integration), urgency of resolution, and the degree of coordination required between multiple agents.

The tasks may be weighted according to a response time metric. The response time metric refers to an estimate of the expected duration or resources required for an agent of the plurality of virtual agents 104A-C to accomplish a given task 110. This metric may reflect factors such as the inherent complexity of the task 110, the current workload of candidate agents, dependencies on external systems, or the likelihood of escalation to a human agent. In some cases, the response time metric may be dynamically adjusted based on the availability characteristics of a virtual agent, such as whether the agent is online, engaged in other tasks, or operating with reduced capacity. The agent management model 112 may assign a weight to each task 110 by evaluating the complexity metric and the response time metric, individually or in combination. For example, a weighted scoring algorithm may prioritize low-complexity, short-response tasks 110 for immediate handling, while high-complexity, long-response tasks 110 may be escalated, deferred, or allocated to agents with specialized capabilities.

The agent management model 112 may divide the plurality of virtual agents 104A-C into subsets 202 based on characteristics or weights assigned to the set of tasks 110 and the characteristics of the available agents. The grouping operation may analyze task requirements (e.g., processing type, data modality, latency constraints, or model complexity) and compare these to agent attributes (e.g., supported algorithms, resource availability, historical performance, or specialized training.) For example, the agent management model 112 may assign all text classification tasks to a subset 202 of agents optimized for natural language processing, while routing numerical prediction tasks to a second subset 202 equipped with regression models. The grouping process may include selecting all agents, a defined portion of agents, or even allocating agents based on current workload and system state.

In a non-limiting example, suppose system 100 has three types of agents: a first type of agent optimized for question answering using an LLM, a second type of agent specialized in tabular data analysis, and a third type of agent configured for document parsing and entity extraction. If the set of tasks 110 includes a mix of user chat requests, spreadsheet scoring, and PDF parsing, the agent management model 112 may divide the agents into subsets 202 as follows: a first subset 202 including only the first type of agent for handling chat requests, a second subset 202 with a second type of agent for tabular predictions, and a third subset 202 including a third type of agent for document parsing tasks.

In some embodiments, the agent management model 112 may be further configured to classify each task within the set of tasks 110 to one or more virtual agents 104A-C based on a combination of task attributes and agent capabilities. The classification process may include analyzing task metadata (e.g., task type, complexity, priority level, input data format, and expected resource consumption) and comparing these characteristics to a capability profile or operational status of each available virtual agent 104. For example, the agent management model 112 may evaluate whether a particular agent is trained to process natural language inputs, supports specific machine learning models required by the task, or has sufficient computational resources available to execute the workload within a defined time constraint. The agent management model 112 may then map each task to a target agent or group of agents by selecting the agent that demonstrates the highest compatibility or predicted performance for the task in question.

The agent management model 112 may generate one or more control instructions 114 tailored for each subset 202. Each control instruction 114 may contain directives specific to the assigned tasks 110. For example, the control instruction 114 for the first subset 202 may specify routing user queries to the first virtual agent 104A with required context windows and response formatting guidelines. The instruction for the second subset 202 may define feature extraction rules and scoring thresholds for the second virtual agent 104B. The instruction for the third subset 202 may specify document storage locations and parsing configurations for the third virtual agent 104C.

The agent management model 112 may generate individual control instructions 114 for each virtual agent 104A-C within a subset 202, providing agent-specific configuration details or sub-task assignments. For example, in a subset 202 designed to process documents, a first virtual agent 104A may receive a control instruction 114 directing it to split documents into sections, a second virtual agent 104B may receive an instruction to extract data from each document, and a third virtual agent 104C may be instructed to classify the extracted data into predefined categories.

With continued reference to Figure 2, the operations may include generating, by the agent management model 112, an updated set of internal parameters 204 for the plurality of virtual agents 104A-C. The updated set of internal parameters 204 may generally refer to any configuration data, model weights, operational thresholds, or other parameter values that define or modify the behavior of the plurality of virtual agents 104A-C. As used herein, internal parameters 204 may include both static and dynamic settings used by each virtual agent 104A-C to perform its assigned tasks 110, interpret inputs, produce outputs, or interact with other system components. The updated set of internal parameters 204 may represent a modification to these settings to adapt the operation of the virtual agents 104A-C in response to changing conditions, performance feedback, or global policy changes.

In various embodiments, the updated set of internal parameters 204 may be generated by the agent management model 112 based on information 106 provided by one or more of the virtual agents 104A-C. For example, if an agent reports a performance degradation, resource bottleneck, or error condition in its information 106, the agent management model 112 may respond by adjusting that agent's internal parameters 204 to mitigate the issue. This could include changing learning rates for a model, updating rule sets, modifying thresholds for triggering alerts, or reallocating computational resources.

Alternatively, the updated set of internal parameters 204 may be generated based on system-wide updates that apply across all or a subset of the virtual agents 104. Such updates may originate from administrative commands, scheduled policy changes, security patches, or the deployment of new global models. For example, the agent management model 112 may propagate updated model weights reflecting improved training data, revised decision rules to comply with new requirements, or new communication protocols for agent-to-agent interactions.

In some embodiments, the updated set of internal parameters 204 may be granular and agent-specific. It can target only those virtual agents 104A-C that require adjustment. In other cases, it may involve bulk updates designed to standardize behavior across multiple agents or subsets 202. The agent management model 112 may package these parameter updates in structured messages or configuration files. It can then transmit them over secure channels. It may also verify a successful application by each targeted agent.

With continued reference to Figure 2, the operations may include generating, by the agent management model 112, the control instruction 114 based on the updated set of internal parameters 204, wherein the control instruction 114 instructs each virtual agent of the plurality of virtual agents 104A-C to update using the updated set of internal parameters 204. The agent management model 112 may incorporate these internal parameters 204 into tailored control instructions 114 for distribution to the relevant virtual agents 104.

In some embodiments, the control instruction 114 may specifically direct a virtual agent 104A-C to trigger model retraining or fine-tuning processes based on the information 106 previously provided by at least one of the virtual agents. For example, if an agent reports degraded performance on certain input types, the agent management model 112 may generate a control instruction 114 that initiates retraining. Such retraining or fine-tuning may be performed locally by the agent, remotely on dedicated training infrastructure, or via hybrid approaches.

Additionally, the control instruction 114 may be used to adjust the functionality of one or more virtual agents 104A-C by changing task assignments, enabling or disabling specific processing modules, or modifying operational modes to match new system requirements. For instance, a control instruction 114 may instruct a document parsing agent to switch to a new extraction schema, reconfigure a classification agent with updated category definitions, or throttle resource usage during periods of high system load.

In an embodiment, the operations may include receiving, by the agent management model 112, one or more performance metrics 206 associated with at least one of the plurality of virtual agents 104A-C. As used herein, performance metrics 206 may refer to any quantitative or qualitative indicators that reflect the operational effectiveness, accuracy, efficiency, or reliability of a virtual agent 104A-C in performing assigned tasks 110. Performance metrics 206 may include, for example, model accuracy scores, precision and recall values, confusion matrices, F1 scores, or area under the curve (AUC) measurements for classification tasks. They may also encompass regression error metrics such as mean squared error (MSE) or mean absolute error (MAE), or natural language processing evaluation scores.

In addition to task-specific model evaluation metrics, performance metrics 206 may further include operational indicators such as latency measurements, throughput rates, resource utilization (e.g., CPU, GPU, memory consumption), failure rates, error logs, or timeout occurrences. Performance metrics 206 may also capture user experience indicators, such as user satisfaction ratings, click-through rates, or session completion rates when the agents interact with end users. Performance metrics 206 may reflect system-level properties like load balancing efficiency, communication overhead, or coordination success rates between multiple virtual agents 104A-C. Such metrics may be collected continuously, periodically, or in response to specific events, and may be reported automatically by each agent as part of the information 106 exchanged with the agent management model 112.

Based on the one or more performance metrics 206 received, the agent management model 112 may be configured to generate an updated set of internal parameters 204 for the plurality of virtual agents 104A-C. This process may involve analyzing the performance metrics 206 to identify trends, anomalies, or areas for improvement in agent behavior. For example, if the agent management model 112 detects that a classification agent's accuracy has dropped below a defined threshold, it may generate updated internal parameters 204 specifying new model weights, adjusted confidence thresholds, or modified preprocessing rules to restore acceptable performance. Similarly, if latency metrics indicate that an agent is exceeding acceptable response times, the updated internal parameters 204 may reduce model complexity, adjust batch sizes, or reallocate computational resources to improve responsiveness.

In some embodiments, the agent management model 112 may employ statistical analysis, rule-based logic, or machine learning techniques to determine optimal parameter updates based on the performance metrics 206. The model may also consider historical performance data, user feedback trends, or system-wide policy updates when generating the updated internal parameters 204.

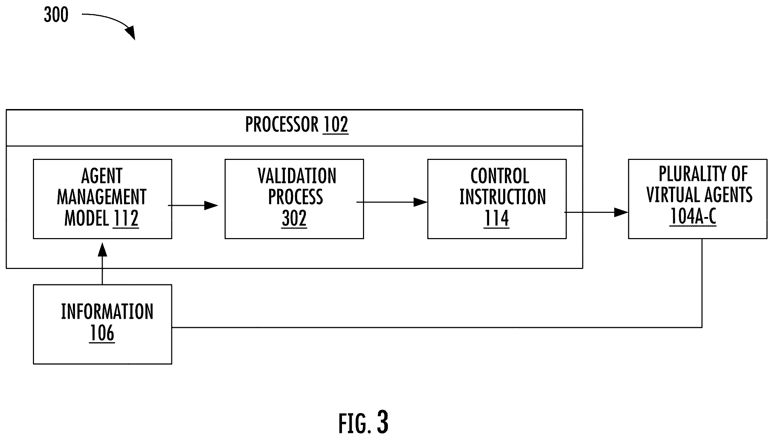

Referring now to Figure 3, a block diagram for a system for validating the information 106 from the at least one virtual agent.

The operations may include validating, by the agent management model 112, the information 106 received from at least one of the plurality of virtual agents 104A-C using a validation process 302. As used herein, the validation process 302 may refer to a set of operations, rules, or algorithms employed by the agent management model 112 to assess the accuracy, integrity, and relevance of information 106 before acting upon it. The validation process 302 may be used to ensure that the system 100 maintains reliable, trustworthy, and consistent operational behavior by preventing errors, false reports, or malicious inputs from propagating through the system.

In some embodiments, the validation process 302 may include verifying that the information 106 is true and legitimate. This may involve checking the consistency of reported data against expected formats, predefined value ranges, or historical baselines. For example, if an agent reports unusually high error rates or performance anomalies, the validation process 302 may cross-check logs, recent task results, or system telemetry to confirm that the issue is genuine and not the result of corrupted data or spurious reporting. The validation process 302 may also involve authentication steps to ensure that the information 106 originates from a known, authorized virtual agent 104.

Additionally, the validation process 302 may include verifying whether the events disclosed in the information 106 are one-time events or system-wide events. For instance, if an agent reports a fault condition, the agent management model 112 may analyze data from other agents to determine whether the issue is isolated to that specific agent or indicative of a broader systemic problem. This contextual evaluation enables the system to respond appropriately. This may include initiating targeted remediation for an individual agent, triggering a coordinated response across multiple agents or computing resources.

In some embodiments, the validation process 302 may include verifying which agents are experiencing the issue identified in the information 106. Upon receiving a report of an error, performance degradation, or operational anomaly, the agent management model 112 may query or monitor other agents in the plurality of virtual agents 104A-C to determine the scope of the problem. This can involve collecting additional status updates, comparing performance metrics 206, analyzing recent task outcomes across agents, and the like.

Once the validation process 302 has been completed, the agent management model 112 may coordinate collaboration among the plurality of virtual agents 104A-C to execute complex or interdependent workflows. This may include defining or updating communication protocols, task hand-off sequences, or shared data structures that enable agents to exchange intermediate results efficiently and reliably. For example, the agent management model 112 may assign a first virtual agent 104A to perform data preprocessing, a second virtual agent 104B to conduct analysis, and a third virtual agent 104C to aggregate and report results.

In response to validated information 106, the agent management model 112 may also refine its own internal models or generate updated internal parameters 204 for the plurality of virtual agents 104A-C. This may include adjusting machine learning weights, updating heuristic rules, modifying operational thresholds, or selecting new algorithmic configurations to improve predictive accuracy, efficiency, or reliability. For example, if performance metrics 206 indicate consistent misclassification of certain input types, the model may initiate retraining or fine-tuning routines using updated datasets.

In some cases, the agent management model 112 may adjust system-wide load balancing strategies to ensure optimal utilization of available resources. This may involve redistributing tasks 110 among the plurality of virtual agents 104A-C based on real-time workload metrics, agent capabilities, or priority levels. For example, if validated information reveals that a particular agent is overloaded or underperforming, the agent management model 112 may shift incoming tasks to less-utilized agents or provision additional computational resources to alleviate bottlenecks. Such dynamic load balancing improves system responsiveness, reduces latency, and helps maintain service quality under varying demand conditions.

The agent management model 112 may further use validated information 106 to trigger mitigation strategies designed to address detected faults, anomalies, or degraded performance. These strategies may include isolating malfunctioning agents, rerouting tasks to redundant systems, applying fallback processing routines, or even disabling certain functionalities to prevent error propagation. For example, if validation confirms a systemic error affecting multiple agents, the model may initiate a coordinated response such as suspending non-critical workflows or throttling input rates to stabilize system behavior.

Following validation, the agent management model 112 may generate one or more control instructions 114 to direct the operation of the virtual agents 104A-C in response to the validated insights. These control instructions 114 may include specific commands for task assignments, configuration updates, communication routing, or operational mode changes. For example, the control instruction 114 may instruct an agent to switch to a safe operating mode, apply new model weights, or reroute results to a different processing pipeline. By issuing precise and actionable control instructions, the agent management model 112 ensures that the system responds intelligently and adaptively to changing conditions or newly detected issues.

Additionally, the agent management model 112 may adjust the scheduling of tasks 110 based on the validated information 106 to optimize system throughput and responsiveness. This may include prioritizing urgent or high-value tasks, deferring lower-priority workloads, or reorganizing execution sequences to respect inter-task dependencies and resource constraints. For example, validated information indicating a critical failure may prompt the model to immediately schedule diagnostic or remediation tasks, while non-critical batch jobs may be delayed.

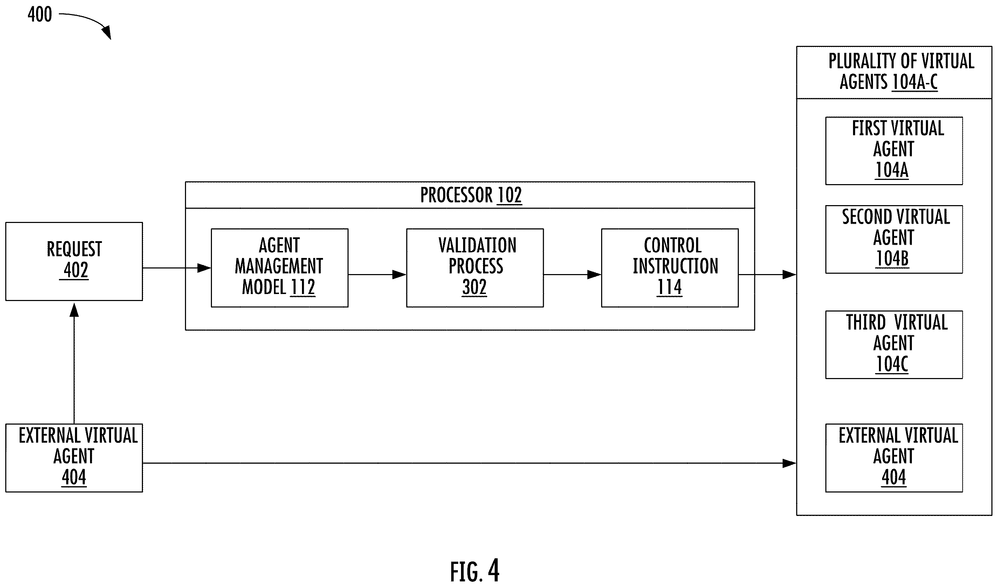

Referring now to Figure 4, a block diagram of a system for the registry of at least one virtual agent into the plurality of virtual agents in accordance with embodiments of the present disclosure.

The operations may further include receiving, by the agent management model 112, a request 402 from one or more external virtual agents 404 that are not currently associated with the plurality of virtual agents 104A-C. Request 402 may generally refer to any message, signal, or structured data payload initiated by an external agent that seeks to be recognized, registered, or incorporated into the managed environment coordinated by system 100. In various embodiments, request 402 may include descriptive metadata about the requesting agent, such as unique identifiers, declared functional capabilities, supported protocols, processing requirements, authentication tokens, and signed certificates to verify origin and integrity. For example, an external virtual agent 404 might transmit request 402 containing device IDs, public keys, and supported model versions to register with a central orchestration service.

External virtual agents 404 are virtual agents that are not initially associated with the plurality of virtual agents 104A-C. The external virtual agents 404 may include any computing agents, software models, or autonomous modules that have not yet been integrated into the system's coordinated task execution framework. These external virtual agents 404 may reside on separate remote computing devices, external partner systems, or dynamically provisioned resources such as cloud-based serverless functions or containerized microservices. External virtual agents 404 may also include specialized modules designed for new task types not previously supported by the existing pool of virtual agents 104.

Upon receipt of request 402, the agent management model 112 may engage a validation process 302 to ensure that any new external virtual agent 404 meets predefined requirements for admission into the managed environment. This validation process 302 may include cryptographic verification of digital signatures or authentication tokens to confirm the identity and trustworthiness of the requesting agent. The agent management model 112 may also validate compatibility by comparing declared capabilities and interfaces against system policies and technical standards. In a non-limiting example, this may include verifying that the external virtual agent 404 can communicate using required APIs or that it runs an approved version of a machine learning model. Additionally, the validation process 302 may check declared resource requirements against available capacity to ensure that onboarding the agent will not exceed allocated budgets or violate quality-of-service commitments.

The validation process 302 may further analyze operational status or health metrics included in request 402 to ensure that the new agent is functional and ready to perform assigned tasks reliably. For example, request 402 may include self-reported diagnostics, recent error rates, or performance benchmarks, which the agent management model 112 may compare against acceptance thresholds. The validation process 302 may also examine whether the new agent's proposed functions overlap with, conflict with, or complement the capabilities of existing virtual agents 104A-C.

Upon successful validation of request 402, the agent management model 112 may proceed to incorporate the external virtual agent 404 into the plurality of virtual agents 104A-C. This incorporation may involve updating internal registries or metadata repositories to include the new agent's identifiers, capabilities, and operational status. The agent management model 112 may allocate necessary computing resources, such as CPU, GPU, memory, or storage quotas, and establish secure communication channels using encryption protocols to protect data in transit. Control instructions 114 may be generated and transmitted to the new agent to configure it with required internal parameters 204, such as initial model weights, policy settings, routing rules, or task assignment templates.

In a non-limiting example, suppose the system operates a central orchestration platform managing multiple virtual agents 104A-C. A new external virtual agent 404 submits a request 402 that includes its supported schema, model version, and encrypted authentication token. The agent management model 112 may validate the request 402 by verifying the token, confirming model compatibility with the system's annotation pipeline, and checking available GPU resources. Upon successful validation, the model may update the system's agent registry to include the new agent, provision GPU resources, and transmit control instructions 114.

Additionally, the agent management model 112 may continuously monitor the behavior of all incorporated agents, including those newly admitted via request 402. In an embodiment, if a virtual agent 104A-C demonstrates abnormal behavior, (e.g., reports repeated errors, consumes excessive resources, or fails to comply with security policies) the agent management model 112 may remove, freeze, isolate, or otherwise deactivate the agent. For example, the model may issue control instructions 114 to suspend task 110 execution for the problematic agent, revoke its credentials, or restrict its access to sensitive data channels. It may reassign that agent's tasks to other members of the plurality of virtual agents 104A-C to maintain uninterrupted service quality.

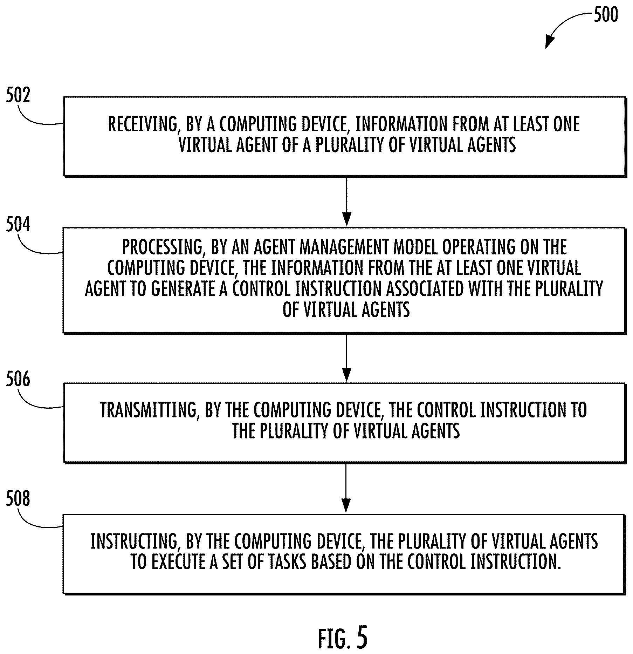

Referring now to Figure 5, a flow diagram of a method for managing a plurality of agents using an agent management model in accordance with embodiments of the present disclosure.

At operation 502, the method includes receiving information from at least one virtual agent of a plurality of virtual agents. The information may include task results, status updates, error reports, or performance metrics describing the operational state of the virtual agent. In some embodiments, the method may further include validating, by the agent management model, the information received using a validation process. This validation process may confirm that the information is true and legitimate, distinguish between one-time events and system-wide issues, and identify which specific agents are affected by a reported problem. By applying this validation process, the agent management model can prevent the propagation of erroneous or malicious data through the system.

At operation 504, the method includes processing, by the agent management model, the validated information from the at least one virtual agent to generate a control instruction associated with the plurality of virtual agents. This processing may include generating an updated set of internal parameters for the plurality of virtual agents based on the validated information or on one or more performance metrics received from the agents. The updated internal parameters may include revised model weights, configuration settings, operational thresholds, and the like. The control instruction may be generated based on these updated internal parameters. In some embodiments, the control instruction may be configured to trigger a model retraining or fine-tuning process for each virtual agent based on the received information.

In an embodiment, the agent management model may access the set of tasks to be performed, group the plurality of virtual agents into subsets based on the task types, and generate one or more control instructions for each subset. Each control instruction may direct its respective subset of agents to perform one or more specific tasks tailored to their capabilities.

At operation 506, the method further includes transmitting the generated control instruction to the plurality of virtual agents. This transmission may involve securely delivering structured commands or configuration updates to each agent.

At operation 508, the method includes instructing the plurality of virtual agents to execute a set of tasks based on the transmitted control instruction.

Additionally, the method may include receiving, by the agent management model, a request from one or more external virtual agents that are not currently associated with the plurality of virtual agents. Upon receipt, the agent management model may validate the request using the validation process, confirming the agent's authorization, compatibility, and operational readiness. If the request is validated successfully, the agent management model may incorporate the external virtual agents into the managed pool.

In an additional embodiment, the agent management model may include a large language model (LLM) and one or more virtual agents in the plurality may include small language models (SLMs).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A system for managing a plurality of agents using an agent management model, the system comprising:
one or more processors;
an agent management model operating on the one or more processors; and
one or more transitory or non-transitory computer-readable media storing instructions that are executable to cause the one or more processors to perform operations, the operations comprising:
receiving information from at least one virtual agent of a plurality of virtual agents;
processing, by the agent management model, the information from the at least one virtual agent to generate a control instruction;
transmitting the control instruction to the plurality of virtual agents; and
instructing the plurality of virtual agents to execute a set of tasks based on the control instruction.

2. The system of claim 1, wherein the operations further comprise:
accessing the set of tasks;
grouping, by the agent management model, the plurality of virtual agents into subsets based on the set of tasks; and
generating, by the agent management model, one or more control instructions for each subset of virtual agents, wherein each control instruction directs the respective subset of virtual agents to perform one or more tasks from the set of tasks.

3. The system of claim 2, wherein:
accessing the set of tasks comprises classifying each task of the set of tasks based on a task type and a complexity metric; and
grouping the plurality of virtual agents into subsets comprises:
mapping one or more virtual agents to the classified tasks based on one or more characteristics of the one or more virtual agents; and
grouping the one or more agents into subsets based on the mapping.

4. The system of claim 1, wherein generating the control instruction comprises:
generating, by the agent management model, an updated set of internal parameters for the plurality of virtual agents; and
generating, by the agent management model, the control instruction based on the updated set of internal parameters, wherein the control instruction instructs each virtual agent of the plurality of virtual agents to update using the updated set of internal parameters.

5. The system of claim 1, wherein the control instruction is configured to trigger a model retraining process for each virtual agent of the plurality of virtual agents based on the information from the at least one virtual agent.

6. The system of claim 1, wherein generating the control instruction comprises generating an individualized control instruction for each virtual agent of the plurality of virtual agents based on the information from the at least one virtual agent.

7. The system of claim 1, wherein the operations further comprise:
receiving, by the agent management model, one or more performance metrics associated with the plurality of virtual agents;
generating, by the agent management model, an updated set of internal parameters for the plurality of virtual agents based on the one or more performance metrics; and
generating, by the agent management model, the control instruction based on the updated set of internal parameters, wherein the control instruction instructs each virtual agent of the plurality of virtual agents to update using the updated set of internal parameters.

8. The system of claim 1, wherein:
the agent management model comprises a large language model; and
one or more virtual agents of the plurality of virtual agents comprise a small language model.

9. The system of claim 1, wherein the operations further comprise:
validating, by the agent management model, information from the at least one virtual agent using a validation process; and
generating, by the agent management model, the control instruction based on the validated information.

10. The system of claim 1, wherein the operations further comprise:
receiving, by the agent management model, a request from one or more external virtual agents;
validating, by the agent management model, the request using a validation process; and
incorporating, by the agent management model, the one or more external virtual agents into the plurality of virtual agents based on the validated request.

11. A method for managing a plurality of agents using an agent management model, the method comprising:
receiving, by a computing device, information from at least one virtual agent of a plurality of virtual agents;
processing, by an agent management model operating on the computing device, the information from the at least one virtual agent to generate a control instruction associated with the plurality of virtual agents;
transmitting, by the computing device, the control instruction to the plurality of virtual agents; and
instructing, by the computing device, the plurality of virtual agents to execute a set of tasks based on the control instruction.

12. The method of claim 11, wherein the method further comprises:
accessing the set of tasks;
grouping, by the agent management model, the plurality of virtual agents into subsets based on the set of tasks; and
generating, by the agent management model, one or more control instructions for each subset of virtual agents, wherein each control instruction directs the respective subset of virtual agents to perform one or more tasks from the set of tasks.

13. The method of claim 11, wherein processing the information from the at least one virtual agent comprises:
generating, by the agent management model, an updated set of internal parameters for the plurality of virtual agents; and
generating, by the agent management model, the control instruction based on the updated set of internal parameters, wherein the control instruction instructs each virtual agent of the plurality of virtual agents to update using the updated set of internal parameters.

14. The method of claim 11, wherein the control instruction is configured to trigger a model retraining process for each virtual agent of the plurality of virtual agents based on the information from the at least one virtual agent.

15. The method of claim 11, wherein generating the control instruction comprises generating an individualized control instruction for each virtual agent of the plurality of virtual agents based on the information from the at least one virtual agent.
